# EUROPÄISCHE PATENTSCHRIFT

(11) **EP 2 726 751 B1**
(45) Veröffentlichungstag und Bekanntmachung des Hinweises auf die Patenterteilung: **28.10.2015**
(21) Anmeldenummer: 12729123.5
(22) Anmeldetag: 22.06.2012
(51) Int. Cl.: F16C 43/04, F16C 33/78

(54) **LAGERVORRICHTUNG**
BEARING DEVICE
DISPOSITIF PALIER

(30) Priorität: 28.06.2011 DE 102011078247
(43) Veröffentlichungstag der Anmeldung: 07.05.2014
(73) Patentinhaber: Aktiebolaget SKF, 415 50 Göteborg (SE)
(72) Erfinder: VON SCHLEINITZ, Thilo, 97422 Schweinfurt (DE); TANKE, Jesko-Henning, 97422 Schweinfurt (DE)
(74) Vertreter: Kuhstrebe, Jochen
(86) Internationale Anmeldenummer: PCT/EP2012/062045
(87) Internationale Veröffentlichungsnummer: WO 2013/000826

(56) Entgegenhaltungen:
- EP-A1- 2 172 665
- WO-A1-2007/138738
- DE-A1- 3 602 051
- DE-A1- 10 309 383

## Beschreibung

Die Erfindung geht aus von einer Lagervorrichtung nach dem Oberbegriff des Anspruchs 1.

Es ist eine Wälzlagervorrichtung bekannt, bei welcher ein als Dichtungsträger ausgebildetes Bauelement an einen Außenring angeschraubt ist. Der Dichtungsträger liegt an einer Dichtung an. Zwischen dem Dichtungsträger und dem Außenring ist ein O-Ring zur Abdichtung vorgesehen.

Die WO 2007/138738 A1, DE 103 09 383 A1 und DE 36 02 051 A1 zeigen gattungsgemäße Lagervorrichtungen mit verklebten Bauelementen, die zur Anlage an eine Dichtung kommen.

Die Aufgabe der Erfindung besteht insbesondere darin, eine gattungsgemäße Lagervorrichtung mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Lagervorrichtung mit wenigstens einem Lagerring und zumindest einem Bauelement, welches zu einem Anliegen an einem Dichtungselement vorgesehen ist.

Es wird vorgeschlagen, dass die Lagervorrichtung wenigstens ein Klebstoffelement aufweist, welches an dem Lagerring und dem Bauelement festklebt. Unter einem "Lagerring" soll insbesondere ein Innenring oder ein Außenring eines Wälzlagers verstanden werden. Hierdurch kann eine hohe Effizienz erreicht werden. Insbesondere kann ein Abdichten zwischen dem Lagerring und dem Bauelement durch das Klebstoffelement erreicht werden. Im Besonderen kann ein geringer Bauraumverbrauch und insbesondere eine geringe Ausdehnung des Lagerrings in eine radiale Richtung erreicht werden. Ferner kann insbesondere eine stabile und kostengünstige Bauweise erreicht werden, insbesondere weil der Raumbedarf klassischer statischer Dichtungsmittel, wie z. B. O-Ringe, vermieden wird und Halteschrauben und Bohrungen mit Gewindeschnitt und diesbezügliche Montagearbeit eingespart werden kann. Insbesondere kann ein Einbringen einer Ausnehmung zur Aufnahme eines Dichtungsmittels in einen gehärteten Bereich des Lagerrings und in einen dünnen Bereich des Bauelements vermieden werden. Außerdem kann insbesondere eine Korrosion des Lagerrings und des Bauelements wenigstens an denjenigen Flächen, an denen sie mit dem Klebstoffelement in Kontakt treten, verhindert werden. Weiterhin kann insbesondere zumindest an denjenigen Stellen, an denen das Klebstoffelement an dem Lagerring und dem Bauelement festklebt, eine durch Mikrobewegungen verursachte Reibung zwischen dem Bauelement und dem Lagerring vermieden werden, wodurch die Bildung von Reibrost vermieden werden kann. Insbesondere kann ausgehend von einem vollständig montierten Zustand eine durch das Klebstoffelement bewirkte Verbindung zwischen dem Lagerring und dem Bauelement lösbar sein, insbesondere ohne schweres Werkzeug, wobei der Lagerring und das Bauelement unzerstört bleiben.

Vorzugsweise wirkt das Klebstoffelement dichtend zwischen dem Bauelement und dem Lagerring, wodurch eine hohe Funktionalität des Klebstoffelements erreicht werden kann. Unter "dichtend" soll insbesondere flüssigkeitsdichtend und/oder luftabdichtend verstanden werden. Insbesondere kann das Bauelement als Dichtungsträger ausgebildet sein. Im Besonderen kann das Bauelement mehrstückig ausgebildet sein. Insbesondere ist das Klebstoffelement homogen ausgebildet.

Mit Vorteil vermittelt das Klebstoffelement eine Hauptbefestigungskraft zwischen dem Lagerring und dem Bauelement. Dadurch kann eine kostengünstige Bauweise erreicht werden, insbesondere weil auf Befestigungsschrauben verzichtet werden kann. Ferner kann insbesondere Sicherheit gegen unbefugte Demontage, Sicherheit gegen selbsttätiges Lösen von Schrauben und keine Notwendigkeit eines Nachprüfens und Nachziehens von Schrauben erreicht werden.

Mit Vorteil ist ein Korrosionsschutzlack auf eine Außenseite des Lagerrings und das Bauelement aufgetragen, wodurch Korrosion verhindert werden kann und in Kombination mit einer Befestigung des Bauelements an dem Lagerring durch das Klebstoffelement, welche aufgrund des Klebstoffelements nur relativ kleine Relativbewegungen zwischen Lagerring und Bauelement zulässt, Fehlstellenbildung und Rissbildung des Korrosionsschutzlack verhindert werden kann.

Mit Vorteil umgibt das Klebstoffelement zumindest einen kreisflächenförmigen Raumbereich vollständig. Dadurch kann ein wirksames Abdichten insbesondere des Raumbereichs erreicht werden. Vorzugsweise ist das Klebstoffelement kreisringförmig ausgebildet, wodurch eine konstruktiv einfache Bauweise erreicht werden kann.

Vorzugsweise weist die Lagervorrichtung einen Absatz auf, welcher eine Höhe aufweist, die gleich einer Breite eines Spalts ist, welcher von dem Lagerring und dem Bauelement gebildet wird. Hierdurch kann eine einfache Montage und eine gleichmäßige Dicke des Klebstoffelements erreicht werden.

Außerdem wird vorgeschlagen, dass die Breite des Spalts zwischen 0,05 mm und 0,5 mm liegt. Hierdurch kann eine konstruktiv einfache Bauweise erreicht werden. Vorzugsweise liegt die Breite des Spalts zwischen 0,05 mm und 0,25 mm und besonders bevorzugt zwischen 0,1 mm und 0,2 mm, wodurch eine stabile Bauweise erreicht werden kann.

Mit Vorteil ist das Bauelement schraubenlos befestigt, wodurch eine kostengünstige Bauweise erreicht werden kann.

Vorzugsweise ist die Lagervorrichtung frei von O-Ringen, welche zu einem Abdichten zwischen dem Bauelement und dem Lagerring vorgesehen sind. Hierdurch kann ein effizientes Abdichten erreicht werden. Im Besonderen kann ein geringer Bauraumverbrauch und insbesondere eine geringe Ausdehnung des Lagerrings in eine radiale Richtung erreicht werden. Ferner kann insbesondere eine stabile und kostengünstige Bauweise erreicht werden. Insbesondere kann ein Einbringen einer Ausnehmung zur Aufnahme eines O-Rings in einen gehärteten Bereich des Lagerrings und in einen dünnen Bereich des Bauelements vermieden werden. Ferner kann insbesondere eine einfache Montage erreicht werden, weil auf ein aufwändiges Vorfixieren eines O-Rings in einer Nut, welcher etwa einen Durchmesser des Lagerrings hat, verzichtet werden kann.

Ferner wird vorgeschlagen, dass das Klebstoffelement einen Schraubenhals einer Schraube der Lagervorrichtung umgibt. Auf diese Weise kann ein einfaches Abdichten an dem Schraubenhals erreicht werden. Vorzugsweise liegt das Klebstoffelement hierbei an dem Schraubenhals an, wodurch eine besonders sichere Abdichtung und eine Befestigung der Schraube durch das Klebstoffelement erreicht werden kann.

Erfindungsgemäß weist die Lagervorrichtung wenigstens eine Ausnehmung auf, welche zu einem Einfließen von überschüssigem Klebstoff bei einer Montage der Lagervorrichtung vorgesehen ist. Dadurch kann vermieden werden, dass Klebstoff zwischen einen Absatz des Bauelements und den Lagerring gelangt. Außerdem kann insbesondere eine besonders sichere Klebewirkung und Dichtwirkung des Klebstoffelements erzielt werden, weil bei einer Montage etwas mehr Klebstoff aufgetragen werden kann, als in dem Spalt aufgenommen werden kann. Insbesondere können das Bauelement und/oder der Lagerring die Ausnehmung aufweisen.

Außerdem wird vorgeschlagen, dass die Lagervorrichtung eine weitere Ausnehmung aufweist, welche zu einem Einfließen von überschüssigem Klebstoff bei einer Montage der Lagervorrichtung vorgesehen ist. Dadurch kann besonders sicher vermieden werden, dass Klebstoff zwischen einen Absatz des Bauelements und den Lagerring gelangt. Insbesondere können das Bauelement und/oder der Lagerring die weitere Ausnehmung aufweisen.

Vorzugsweise ist das Bauelement zum Halten und Führen des Dichtungselements vorgesehen, wobei das Dichtungselement bei wenigstens einem Betriebsvorgang ein relativ zu dem Lagerring rotierendes Lagerbauteil abdichtet. Dadurch kann ein effektives Dichten erzielt werden.

Weiterhin wird ein Wälzlager, insbesondere Großwälzlager, vorgeschlagen welches die Lagervorrichtung aufweist. Unter einem "Großwälzlager" soll insbesondere ein Wälzlager verstanden werden, welches einen Außenring mit einem Außendurchmesser aufweist, welcher größer als fünfhundert Millimeter ist, wobei der Außendurchmesser vorzugsweise im Bereich von 1500 Millimeter bis 4000 Millimeter liegt. Hierdurch kann eine hohe Effizienz erreicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Teilschnitt durch einen Teil eines zweireihigen Kegelrollenlagers mit einer erfindungsgemäßen Lagervorrichtung, wobei Wälzkörper des Kegelrollenlagers nicht dargestellt sind, und
Fig. 2 zeigt einen vergrößerten Ausschnitt aus Figur 1.

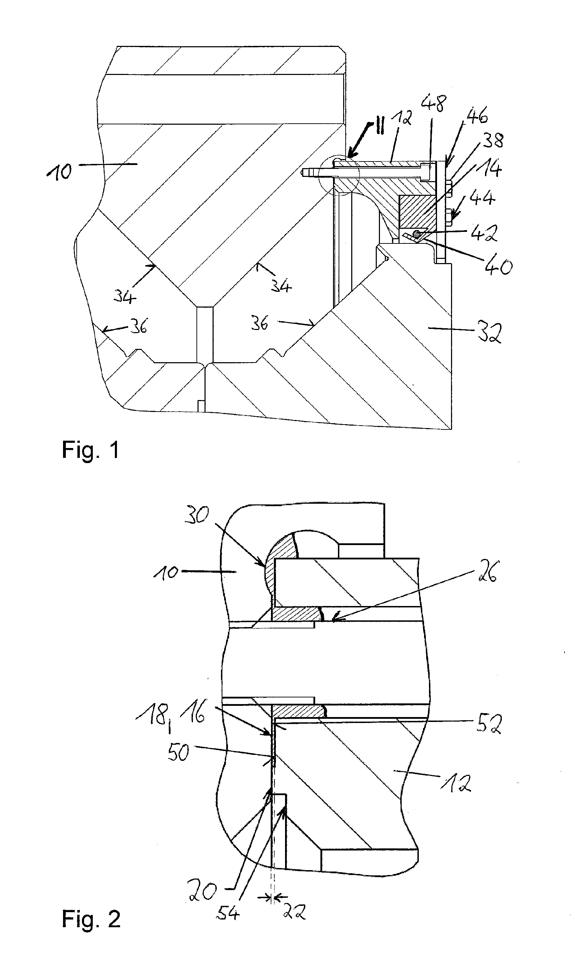

Figur 1 zeigt einen Teilschnitt durch einen Teil eines zweireihigen Großkegelrollenlagers mit einer erfindungsgemäßen Lagervorrichtung, wobei eine Darstellung von Wälzkörpern des Kegelrollenlagers unterlassen wurde. Die Lagervorrichtung weist einen als Außenring ausgebildeten Lagering 10 und einen Innenring 32 auf. Der Lagerring 10 weist zwei Laufflächen 34 für Kegelrollen auf. Ferner weist der Innenring 32 zwei Laufflächen 36 für Kegelrollen auf. An einem als Dichtungsträger ausgebildeten Bauelement 12 der Lagervorrichtung ist eine Platte 46 mittels einer ersten Schraube 38 befestigt. An der Platte 46 ist mittels einer zweiten Schraube 44 ein Dichtelement 14 der Lagervorrichtung befestigt, welches eine Dichtlippe 40 aufweist, welche von einem Radialwellendichtring 42 der Lagervorrichtung gegen den Innenring 32 gedrückt wird. Das Bauelement 12 und das Dichtelement 14 erstrecken sich jeweils kontinuierlich über eine dreihundertsechzig Grad um eine Hauptsymmetrieachse, welche parallel zu einer axialen Richtung des Großkegelrollenlagers und durch einen Schwerpunkt des Großkegelrollenlagers verläuft. Das Bauelement 12 wird durch eine Schraube 48 gegen den Lagerring 10 gedrückt. Weitere Schrauben (nicht gezeigt), welche baugleich mit der Schraube 48 sind, drücken das Bauelement 12 entlang eines Kreises gegen den Lagerring 10. Die Lagervorrichtung und das Großkegelrollenlagers sind frei von O-Ringen, welche zu einem Abdichten zwischen dem Bauelement 12 und dem Lagerring 10 vorgesehen sind.

Die Lagervorrichtung weist ein abdichtendes Klebstoffelement 16 (Figur 2) auf, welches homogen ist und aus Klebstoff gebildet ist. Das Klebstoffelement 16 klebt an dem Bauelement 12 und dem Lagerring 10 und ist dadurch in einem Spalt 18, welcher von dem Bauelement 12 und dem Lagerring 10 gebildet ist, gehalten. Tritt bei einem Betrieb eine Belastungskraft auf, welche auf ein Auseinanderbewegen des Bauelements 12 und des Lagerrings 10 gerichtet ist, so wird mittels des Klebstoffelements 16 eine Befestigungskraft ausgeübt, die der Belastungskraft entgegenwirkt. Ein kreisringförmiger Teil des Klebstoffelements 16 umgibt eine Kreisscheibe (nicht gezeigt) vollständig. Ein Mittelpunkt der Kreisscheibe ist auf der Hauptsymmetrieachse angeordnet. Ferner verlaufen alle Flächenerstreckungsrichtungen der Kreisscheibe senkrecht zu der Hauptsymmetrieachse. Der kreisringförmige Teil liegt auf einer seiner Seiten vollständig an dem Lagerring 10 an.

Das Bauelement 12 weist einen Absatz 20 auf, welcher vollständig an dem Lagerring 10 anliegt. Der Absatz 20 erhebt sich ausgehend von einer ebenen Fläche 50 des Bauelements 12, welche zusammen mit einer ebenen Fläche 52 des Lagerrings 10 den Spalt 18 bildet. Eine Höhe 22 des Absatzes ist gleich einer Breite des Spalts 18. Die Breite des Spalts beträgt 0,2 Millimeter. Alternativ kann die Breite des Spalts 0,1 mm betragen, wenn das Klebstoffelement 16 aus 2K-Epoxidharzkleber besteht. Hierbei wäre der 2K-Epoxidharzkleber raumtemperaturhärtend und pastös. Das Klebstoffelement 16 umgibt einen Schraubenhals 26 der Schraube 48 entlang seines Umfangs vollständig, wodurch der Schraubenhals 26 gegen Korrosion geschützt ist. Der Absatz 20 leitet Kräfte der Schraube 48 weiter.

Der Lagerring 10 weist bezüglich einer eckigen Referenzform eine rundliche Ausnehmung 30 auf, in welche bei einer Montage der Lagervorrichtung überschüssiger Klebstoff einfließt, welcher in dem Spalt 18 keinen Platz mehr findet. Folglich ist ein Teil des Klebstoffelements 16 auch in der Ausnehmung angeordnet, wobei der betreffende Teil für einen Korrosionsschutz des Bauelements 12 und des Lagerrings 10 dient. Alternativ kann die Ausnehmung 30 auch an dem Bauelement 12 vorgesehen sein. Derjenige Teil des Klebstoffelements 16, welcher in der Ausnehmung 30 angeordnet ist, umgibt die Hauptsymmetrieachse vollständig entlang eines Kreises. Insbesondere dieser Teil besitzt Dichtfunktion hin zu einem Inneren des Großwälzlagers. Die Ausnehmung 30 kann vollständig mit Klebstoff des Klebstoffelements 16 ausgefüllt sein.

Angrenzend an den Absatz 20 weist das Bauelement 12 eine Ausnehmung 54 auf, in welche bei einer Montage der Lagervorrichtung überschüssiger Klebstoff einfließen kann. Bei einer Montage wird Klebstoff, welcher nach der Montage das Klebstoffelement bildet, den Lagerring und/oder auf das Bauelement 12 aufgetragen. Anschließend werden der Lagerring 10 und das Bauelement 12 mit gleichmäßigem Druck gegeneinander gedrückt, so dass sich der Klebstoff räumlich gleichmäßig verteilt. Die Schraube 48 und weitere, analog angeordnete Schrauben können zu einer Erzeugung dieses Drucks verwendet werden.

Ein Außendurchmesser des Großkegelrollenlagers beträgt 2420 Millimeter. Sowohl der Lagerring 10 als auch das Bauelement 12 können aus einem Metall, insbesondere aus einem Stahl, als auch aus einem Polymer gebildet sein.

Alternativ zu der beschriebenen Ausführungsform kann das Bauelement 12 auch schraubenlos, und zwar insbesondere ausschließlich durch das Klebstoffelement 16, an dem Lagerring 10 befestigt sein. Bei einer Befestigung des Bauelements 12 an dem Lagerring 10 mittels Schrauben kann das Klebstoffelement 16 auch durch einen reinen Dichtstoff gebildet sein, welcher bei einer Montage zähflüssig ist und nach einem Aufbringen aushärtet.

**Bezugszeichenliste**

| | |
|---|---|
| 10 | Lagerring |
| 12 | Bauelement |
| 14 | Dichtungselement |
| 16 | Klebstoffelement |
| 18 | Spalt |
| 20 | Absatz |
| 22 | Höhe |
| 26 | Schraubenhals |
| 30 | Ausnehmung |
| 32 | Innenring |
| 34 | Lauffläche |
| 36 | Lauffläche |
| 38 | Schraube |
| 40 | Dichtlippe |
| 42 | Radialwellendichtring |
| 44 | Schraube |
| 46 | Platte |
| 48 | Schraube |
| 50 | Fläche |
| 52 | Fläche |
| 54 | Ausnehmung |
| | |

## Patentansprüche

1. Lagervorrichtung, insbesondere Wälzlagervorrichtung, mit wenigstens einem Lagerring (10) und zumindest einem Bauelement (12), welches zu einem Anliegen an einem Dichtungselement (14) vorgesehen ist, die wenigstens ein Klebstoffelement (16), welches an dem Lagerring (10) und dem Bauelement (12) festklebt, aufweist, **dadurch gekennzeichnet, dass** die Lagervorrichtung wenigstens eine Ausnehmung (30) aufweist, welche zu einem Einfließen von überschüssigem Klebstoff bei einer Montage der Lagervorrichtung vorgesehen ist.

2. Lagervorrichtung nach Anspruch 1, wobei das Klebstoffelement (16) zumindest einen kreisflächenförmigen Raumbereich vollständig umgibt.

3. Lagervorrichtung nach einem der vorherigen Ansprüche, wobei die Lagervorrichtung einen Absatz (20) aufweist, welcher eine Höhe (22) aufweist, die gleich einer Breite eines Spalts (18) ist, welcher von dem Lagerring (10) und dem Bauelement (12) gebildet wird.

4. Lagervorrichtung nach Anspruch 3, wobei die Breite des Spalts (18) zwischen 0,05 mm und 0,5 mm liegt.

5. Lagervorrichtung nach einem der vorherigen Ansprüche, wobei das Bauelement (12) schraubenlos befestigt ist.

6. Lagervorrichtung nach einem der vorherigen Ansprüche, wobei die Lagervorrichtung frei von O-Ringen ist, welche zu einem Abdichten zwischen dem Bauelement (12) und dem Lagerring (10) vorgesehen sind.

7. Lagervorrichtung nach einem der vorherigen Ansprüche, wobei das Klebstoffelement (16) einen Schraubenhals (26) einer Schraube (48) der Lagervorrichtung umgibt.

8. Lagervorrichtung nach einem der vorherigen Ansprüche, bei der die Ausnehmung (30) eine rundliche Form aufweist.

9. Lagervorrichtung nach einem der vorherigen Ansprüche, wobei das Klebstoffelement (16) eine Hauptbefestigungskraft zwischen dem Lagerring (10) und dem Bauelement (12) vermittelt.

10. Wälzlager, insbesondere Großwälzlager, mit einer Lagervorrichtung nach einem der Ansprüche 1 bis 9.

## Claims

1. Bearing device, in particular rolling bearing device, with at least one bearing ring (10) and at least one component (12), which is intended for abutting against a sealing element (14), said bearing device having at least one adhesive element (16), which adheres firmly to the bearing ring (10) and the component (12), **characterized in that** the bearing device has at least one recess (30), which is intended for the admission of a flow of excess adhesive during assembly of the bearing device.

2. Bearing device according to Claim 1, wherein the adhesive element (16) completely surrounds at least one spatial region in the form of a circular face.

3. Bearing device according to either of the preceding claims, wherein the bearing device has a shoulder (20) having a height (22) which is the same as a width of a gap (18) formed by the bearing ring (10) and the component (12).

4. Bearing device according to Claim 3, wherein the width of the gap (18) lies between 0.05 mm and 0.5 mm.

5. Bearing device according to one of the preceding claims, wherein the component (12) is fastened without the use of screws.

6. Bearing device according to one of the preceding claims, wherein the bearing device is free of O-rings intended to form a seal between the component (12) and the bearing ring (10).

7. Bearing device according to one of the preceding claims, wherein the adhesive element (16) surrounds a screw neck (26) of a screw (48) of the bearing device.

8. Bearing device according to one of the preceding claims, in which the recess (30) has a round shape.

9. Bearing device according to one of the preceding claims, wherein the adhesive element (16) imparts a main fastening force between the bearing ring (10) and the component (12).

10. Rolling bearing, in particular large rolling bearing, with a bearing device according to one of Claims 1 to 9.

## Revendications

1. Dispositif de palier, en particulier dispositif de palier à roulement, avec au moins une bague de palier (10) et au moins un composant (12), qui est prévu pour s'appliquer sur un élément d'étanchéité (14), qui présente au moins un élément de colle (16) qui colle à la bague de palier (10) et au composant (12), **caractérisé en ce que** le dispositif de palier présente au moins un évidement (30), qui est prévu en vue d'un écoulement de colle excédentaire lors d'un montage du dispositif de palier.

2. Dispositif de palier selon la revendication 1, dans lequel l'élément de colle (16) entoure entièrement au moins une zone spatiale de forme circulaire plate.

3. Dispositif de palier selon l'une quelconque des revendications précédentes, dans lequel le dispositif de palier présente une surélévation (20), qui présente une hauteur (22) qui est égale à une largeur d'une fente (18), qui est formée par la bague de palier (10) et le composant (12).

4. Dispositif de palier selon la revendication 3, dans lequel la largeur de la fente (18) se situe entre 0,05 mm et 0,5 mm.

5. Dispositif de palier selon l'une quelconque des revendications précédentes, dans lequel le composant (12) est fixé sans vis.

6. Dispositif de palier selon l'une quelconque des revendications précédentes, dans lequel le dispositif de palier ne comporte pas de joints toriques, qui sont prévus en vue d'une étanchéité entre le composant (12) et la bague de palier (10).

7. Dispositif de palier selon l'une quelconque des revendications précédente, dans lequel l'élément de colle (16) entoure un col de vis (26) d'une vis (48) du dispositif de palier.

8. Dispositif de palier selon l'une quelconque des revendications précédentes, dans lequel l'évidement (30) présente une forme ronde.

9. Dispositif de palier selon l'une quelconque des revendications précédentes, dans lequel l'élément de colle (16) confère une force de fixation principale entre la bague de palier (10) et le composant (12).

10. Palier à roulement, en particulier couronne géante d'orientation, avec un dispositif de palier selon l'une quelconque des revendications 1 à 9.
